# EUROPEAN PATENT SPECIFICATION

(11) **EP 1 979 815 B1**
(45) Date of publication and mention of the grant of the patent: **19.05.2010**
(21) Application number: 07700134.5
(22) Date of filing: 12.01.2007
(51) Int. Cl.: G06F 11/14

(54) **METHOD OF PRESERVING THE SAFE STATE OF A REDUNDANT PROCESSOR AFTER OCCURENCE OF A FAILURE**
VERFAHREN ZUR ERHALTUNG DES SAFE-ZUSTANDS EINES REDUNDANTEN PROZESSORS NACH DEM AUFTRETEN EINES AUSFALLS
PROCÉDÉ DE CONSERVATION DE L'ÉTAT SÛR D'UN PROCESSEUR REDONDANT APRÈS UNE DÉFAILLANCE

(30) Priority: 13.01.2006 CZ 20060027
(43) Date of publication of application: 15.10.2008
(73) Proprietor: AZD Praha S.R.O., 106 17 Praha 10 (CZ)
(72) Inventor: HOUSER, Jiri, 140 00 Praha 4 (CZ); KLAPKA, Stepan, 106 00 Praha 10 (CZ); SVEJDA, Jaromir, 289 22 Lysa nad Labem (CZ); PSENICKA, Pavel, 182 00 Praha 8 (CZ); BENES, Tomas, 160 00 Praha 6 (CZ); TOMOVIC, Martin, 917 05 Trnava (CZ); SMRCKA, Petr, 591 01 zdar nad Sazavou (CZ)
(74) Representative: Smrckova, Marie
(86) International application number: PCT/CZ2007/000001
(87) International publication number: WO 2007/079700

(56) References cited:
- EP-A- 0 394 834
- EP-A- 1 338 492
- WO-A-03/036480
- US-A- 4 965 828
- US-A1- 2003 126 494
- US-B1- 6 625 730
- US-B1- 51 225 090

## Description

### Technical Field

The invention concerns the method of preservation a safe state, of electronic safety-relevant equipment, particularly for railway signalling equipment, based on a composite fail-safety principle, i.e. electronic equipment relating to safety in which redundant safety technology is used to ensure safety during a failure.

### Background of the Invention

With electronic safety-relevant equipment, particularly for railway signalling equipment, for which a composite fail-safety principle is used, it is necessary to carry out the request for transition to a safe state after detecting the first failure that could be dangerous to others in connection with the occurrence of the next failure. With the current equipment this request is usually carried out
- either (i) by switching off the power supply of the entire electronic safety-relevant equipment, or only part of it,
- or (ii) by the controlled termination of the relevant activity of the electronic safety-relevant equipment, or by the controlled termination of the safety-relevant activity, at least of those redundant processor parts, of the given electronic safety-relevant equipment that, by continuing in the safety-relevant activity, could be dangerous in connection with the occurrence of next failures in the given electronic safety-relevant equipment.

The disadvantages of the existing electronic safety-relevant systems in which the request for transition to a safe state after a failure is carried out pursuant to the aforementioned point (i) and which is implemented by hardware resources, consist, in the case of the termination and subsequent restoration of the supply of electrical energy, in the inability to automatically restore the safety-relevant activity of the failure-free equipment without the intervention of a competent person.

The disadvantages of the existing electronic safety-relevant systems in which the request for transition to a safe state after a failure is carried out pursuant to the aforementioned point (ii), and which is carried out primarily by software resources, consist in the risk of the unauthorised termination of the safe state in the case of the equipment transition to a safe state after a failure and the subsequent re-initialisation for any reason (the loss and sudden renewal of electricity, EMI, ESD, etc.).

The disadvantages of the existing electronic safety-relevant systems in which the request for transition to a safe state after a failure is carried out pursuant to the aforementioned point (ii), and which is carried out primarily by hardware resources, consist in the risk of an unauthorized termination of the safe state if further failures occur.

EP 1 338 492 A1 describes the system for occupancy detection in a raiLroad line and for digital communication with trains that run along said railroad line. The system uses a specific hardware device for transition into a safe state, and this hardware device uses the inherent fail-safety principles. The disadvantage of this complicated hardware solution of a circuit for ensuring the transition into a safe state there is, that, for ensuring the safety of railway signalling equipment, hardware device must be kept for all the time continually in activity. This hardware device is to ensure the same function of maintaining of the safe state continually in functioning, and thus under a constant load, when any failure immediately leads to breakdown of the whole device and to the termination of the activity, which is negative for the available reaction of system. This has an evident negative impact both on the size of the device and on the price of the resulting device, but also on the lower reliability and availability.

### Summary of Invention

The aforementioned disadvantages of the solutions that are known so far are eliminated or substantially limited by the method of preservation a safe state, for safety-relevant equipment in particular for railway signalling equipment, by the use of composite fail-safety principle according to this invention, the essence of which consists in the safety-relevant information, that is necessary for carrying out the safety-relevant processes of the redundant processor part of the electronic safety-relevant equipment, being stored in the non-volatile memory belonging to the given redundant processor part of the electronic safety-relevant equipment, When starting the safety-relevant activity, the safety-relevant information is brought to the volatile operating memory of the redundant processor part of the electronic safety-relevant equipment, and is intentionally rewritten by different information, hence corrupting the said safety-relevant information in the non-volatile memory belonging to the given redundant processor part of the electronic safety-relevant equipment. When the redundant processor part of the electronic safety-relevant equipment transits to the safe state after a failure, the appropriate safety-relevant information of the given redundant processor part of the electronic safety-relevant equipment is intentionally rewritten by different information, hence corrupting the said safety-relevant information stored in the volatile operating memory belonging to the given redundant processor part of the electronic safety-relevant equipment. This ensures that it is no longer possible to restore this safety-relevant information, even in the case of reinitialising the redundant processor part of the electronic safety-relevant equipment for any reason, and thus this safe state is preserved and it is only possible to abandon it by the prescribed procedures of the operators or maintenance crew.

The main advantage of the method of preservation of the safe state, for electronic safety-relevant equipment using the composite fail-safety principle, according to this invention, when compared to the heretofore known solution specified in point (ii) of the existing state of the technology, consists in limiting the risk of the unauthorised termination of the safe state after re-initialisation.

It is also an advantage, that the safety-relevant information that is necessary for performing the safety-relevant activity of the redundant processor part of the electronic safety-relevant equipment is mutually verified by the individual redundant processor parts of the given electronic safety-relevant equipment when initiating or performing a safety-relevant activity. To verify the correctness it is necessary for the meaning of the appropriate safety-relevant information attained in the minimum-specified number of redundant processor part of the given electronic safety-relevant equipment to agree.

Verifying the correctness of the safety-relevant information of the individual redundant processor parts of the given electronic safety-relevant equipment increases the probability of detecting failures, and therefore increases safety as well.

It is also an advantage, that the safety-relevant information, that is necessary for performing the safety-relevant activity of the redundant processor part of the electronic safety-relevant equipment, is protected by encryption in order to protect it against its unwelcome unauthorised use by a processor part of the electronic safety-relevant equipment, that has not fulfilled all the necessary conditions for performing a safety-relevant activity. The key required for decoding the safety-relevant information encrypted in this way is given by a previously-defined cooperating and verifying redundant processor part of the electronic safety-relevant equipment after verifying the integrity of tha given redundant processor part of the electronic safety-relevant equipment.

It is possible for the cooperating and verifying redundant processor part of the electronic safety-relevant equipment to prevent the unwanted, unauthorised use of the safety-relevant information by not providing the key.

It is also an advantage, that a part of the safety-relevant information that is necessary for performing the safety-relevant activity of the redundant processor part of the electronic safety-relevant equipment, is also an authentication information that is necessary for creating and verifying authentic safety-relevant messages. When performing a safety-relevant activity of the given redundant processor part of the electronic safety-relevant equipment, authentic safety-relevant messages transferred between connected electronic safety-relevant equipment are created and verified using this authentication information.

By expanding the safety-relevant information by authentication information the method of preserving a safe state in accordance with this invention also extends to creating and verifying authentic safety-relevant messages.

It is also an advantage, that the safety-relevant information, that is necessary for performing the safety-relevant activity of the redundant processor part of the electronic safety-relevant equipment, is transferred from the volatile operating memory to the non-volatile memory belonging to the redundant processor part of the electronic safety-relevant equipment, in the event of the controlled termination of the activity of the given redundant processor part of the electronic safety-relevant equipment due to a loss of electricity or the beginning of a service event during otherwise failure-free activity. This enables it to be reused after the electricity is restored to the safety-relevant equipment while restoring the safety-relevant activity of the redundant processor part of the electronic safety-relevant equipment.

Thus, unlike the heretofore known solution specified in point (i) of the existing state of the technology, the automatic restoration of the safety-relevant activity of the failure-free equipment is ensured after the delivery of electric energy is restored.

It is also an advantage that, after initiating the activity of the redundant processor part of the electronic safety-relevant equipment, the safety-relevant information, that is necessary for performing the safety-relevant activity of the redundant processor part of the electronic safety-relevant equipment, is intentionally rewritten by different information obtained by encryption in the non-volatile memory belonging to the given redundant processor part of the electronic safety-relevant equipment. The key, required for decoding the safety-relevant information stored in the volatile operating memory of the redundant processor part of the electronic safety-relevant equipment encrypted in this way, is stored in the non-volatile memory belonging to the given redundant processor part of the electronic safety-relevant equipment at the instant of a controlled termination of the activity of the redundant processor part of the electronic safety-relevant equipment. When the redundant processor part of the electronic safety-relevant equipment transits to a safe state after a failure, the appropriate key stored in the volatile operating memory of the given redundant processor part of the electronic safety-relevant equipment is intentionally rewritten by different information, hence corrupting the said safety-relevant information. In the event of a controlled termination of the safety-relevant activity, only a key, that can be substantially shorter than all of the safety-relevant information, is stored.

It is also an advantage, that the safety-relevant information, that is necessary for performing the safety-relevant activity of the redundant processor part of the electronic safety-relevant equipment, is replaced in the volatile operating memory of the given redundant processor part of the electronic safety-relevant equipment by safety-relevant information that is necessary for performing the safety-relevant activity of the redundant processor part of the electronic safety-relevant equipment in various degraded functional modes with functional limitations in the event of the detection of a failure, depending on the character, severity and extent of the detected failure or detected failures of the individual redundant processor parts of the electronic safety-relevant equipment.

Depending on the character and severity of the detected failure, the electronic safety-relevant equipment is enabled to perform the safety-relevant activity in various degraded functional modes with functional limitations which are eventually preserved after its re-initialisation.

It is also an advantage that the safety-relevant information, that is necessary for performing the safety-relevant activity of the redundant processor part of the electronic safety-relevant equipment, is continuously modified in the volatile operating memory of the given redundant processor part of the electronic safety-relevant equipment during the safety-relevant activity of the given redundant processor part of the electronic safety-relevant equipment on the basis of the verified integrity of the cooperating previously-defined redundant processor parts of the given electronic safety-relevant equipment.

Thus, when restoring the safety-relevant activity, the redundant processor part of the electronic safety-relevant equipment is enabled to verify the state in which the cooperating previously defined redundant processor part of the given electronic safety-relevant equipment was found before carrying out the re-initialisation.

It is also an advantage, that the safety-relevant information that is necessary for performing the safety-relevant activity of the redundant processor part of the electronic safety-relevant equipment, is encrypted using a key during every modification in the volatile operating memory of the given redundant processor part of the electronic safety-relevant equipment. The safety-relevant information, encrypted in this manner, is stored in the non-volatile memory belonging to the given, redundant processor part of the electronic safety-relevant equipment.

Storing the key, which can be substantially shorter than the entire safety-relevant information, in the event of a controlled termination of the safety-relevant activity, is thus enabled for modified safety-relevant information as well.

It is also an advantage, that the safety-relevant information, that is necessary for performing the safety-relevant activity of the redundant processor part of the electronic safety-relevant equipment, is encrypted using a multi-component key during every modification in the volatile operating memory of the given redundant processor part of the electronic safety-relevant equipment, in cooperation with the previously-defined redundant processor parts of the given electronic safety-relevant equipment. The safety-relevant information, encrypted in this manner, is stored in the non-volatile memory belonging to the given redundant processor part of the electronic safety-relevant equipment. At the instant of a controlled termination of the activity of the redundant processor part of the electronic safety-relevant equipment, the appropriate part of the multi-component key, necessary for decoding the safety-relevant information encrypted in this manner, is stored in the non-volatile memory, belonging to the given redundant processor part of the electronic safety-relevant equipment. When initiating the safety-relevant activity the safety-relevant information, encrypted in this manner, and stored in the non-volatile memory belonging to the given redundant processor part of the electronic safety-relevant equipment, is decoded on the basis of the verified integrity of the cooperating previously-defined redundant processor parts of the given electronic safety-relevant equipment by the joint use of all of the keys' components.

It is possible, for the cooperating and verifying redundant processor parts of the electronic safety-relevant equipment to prevent the unwanted, unauthorised use of the safety-relevant information by not providing the key.

### Detailed Description of the Invention's Preferred Embodiments

The electronic safety-relevant equipment, especially railway electronic signalling equipment, with system based on a composite fail-safety principle, is made up of redundant processor parts, each of which has the appropriate non-volatile and volatile memories available for storing safety-relevant information, made up of sets of data. When initiating a safety-relevant activity the previously-defined cooperating and verifying redundant processor part of the electronic safety-relevant equipment provides a key, necessary for decoding the safety-relevant information after verifying the integrity of the given redundant processor part of the electronic safety-relevant equipment. The encrypted safety-relevant information is transferred from the non-volatile memory to the volatile operating memory, where it is decoded by the provided key and the mutual verification of its correctness is carried out by the individual redundant processor parts of the given electronic safety-relevant equipment. The safety-relevant information is subsequently intentionally rewritten by different information in the appropriate non-volatile memory using encryption.

During the safety-relevant activity of the given redundant processor part of the electronic safety-relevant equipment, the safety-relevant information in the volatile operating memory of the given redundant processor part of the electronic safety-relevant equipment is continually modified on the basis of the verification of the integrity of the cooperating previously-defined redundant processor parts of the given electronic safety-relevant equipment. The modification of the safety-relevant information is also carried out in the event a failure is detected, when, depending on the character, severity and extent of the detected failure, the safety-relevant information in the volatile operating memory of the given redundant processor part, of the electronic safety-relevant equipment is replaced by the safety-relevant information that is required for performing the safety-relevant activity of the given processor part of the electronic safety-relevant equipment in various degraded functional modes with functional limitations. The modified safety-relevant information is encrypted with the use of a key, and the safety-relevant information encrypted in this manner is stored in the non-volatile memory belonging to the given redundant processor part of the electronic safety-relevant equipment. If necessary, the encryption of the modified safety- relevant information is carried out by a multi-component key in cooperation with previously-defined redundant processor parts of the electronic safety-relevant equipment.

In the event of the controlled termination of the activity of the redundant processor part of the electronic safety-relevant equipment due to a loss of electricity or the initiation of a service event, the key required for decoding the safety-relevant information is transferred from the volatile operating memory to the non-volatile memory belonging to the given redundant processor part of the electronic safety-relevant equipment. This enables the reuse of the safety-relevant information, when restoring the safety-relevant activity of the redundant processor part of the electronic safety-relevant equipment after the electricity is restored to the electronic safety-relevant equipment.

During transition of the redundant processor part of the electronic safety-relevant equipment to a safe state after a failure, the safety-relevant information and the key necessary for decoding the safety-relevant information stored in the volatile operating memory is intentionally rewritten by different information, hence corrupting the said safety-relevant information, ensuring that it is no longer possible to restore this safety-relevant information, thus continuing in the safety-relevant activity, even in the event the redundant processor part of the electronic safety-relevant equipment is re-initialised.

The authentication information, that is necessary for creating authentic safety-relevant messages, is part of the set of data, that comprises the safety-relevant information.

The safety-relevant information can be secured with a detection code and its integrity is verified in the given redundant processor part of the electronic safety-relevant equipment by this detection code before its use.

In the event the redundant processor part of the electronic safety-relevant equipment transits to a safe state after a failure, in which the termination or limitation of the activity of the processor of the given redundant processor part of the electronic safety-relevant equipment is required, the activity of the redundant processor part of the electronic safety-relevant equipment is terminated by transition the given processor to a state of lower power consumption or else its activity is entirely terminated.

The safety-relevant information is stored in the non-volatile memory of the given redundant processor part of the electronic safety-relevant equipment or is restored after testing the given redundant processor part, while information on the specified manner of its creation or restoration can be part of this safety-relevant information.

It is also possible to use the aforementioned methods of preserving the safe state after a failure according to this invention for electronic safety-relevant equipment with a single electronic structure.

### Industrial Applicability

As follows from the aforementioned description, the method of preserving a safe state after a failure for electronic safety-relevant equipment, in which redundant safety technology is used during a failure in accordance with this invention in order to ensure safety, can be used both during the construction of railway signalling equipment and for innovations to existing railway signalling equipment, particularly by using the safety-relevant facts in question. Last, but not least, it is possible to use the invention everywhere where safety-relevant systems are used and where it is necessary to maintain safety during a failure of this equipment, such as in nuclear energy plants, the chemical industry, banking and so on.

## Claims

1. The method of preservation the safe state of an electronic safety-relevant equipment based on a composite fail-safety principle, particularly railway signalling equipment, i.e. electronic equipment, relating to safety in which redundant safety technology is used to ensure safety during a failure and comprising two or more redundant processor parts, each comprising its own non-volatile and volatile operating memory, available for storing safety-relevant information, made up of sets of data, **characterised in that**
- a safety-relevant information, that is necessary for performing the safety-relevant activity of the redundant processor part, stored in the non-volatile memory belonging to the given redundant processor part, is transferred to the volatile operating memory of the redundant processor part upon initiating a safety-relevant activity and is intentionally rewritten by a different information, hence corrupting the said safety-relevant information in the non-volatile memory belonging to the given redundant processor part,
- while the appropriate safety-relevant information, stored in the volatile operating memory of the given redundant processor part is intentionally rewritten by a different information, hence corrupting said safety-relevant information, when the redundant processor part transits to a safe state after a failure,
- which ensures that it is no longer possible to restore this safety-relevant information, even in the event of re-initialising the redundant processor part of the electronic safety-relevant equipment and thus this safe state of the equipment is preserved and it is only possible to abandon it by the prescribed procedures of the operators or maintenance crew.

2. The method pursuant to claim 1, **characterised in that**,
- the safety-relevant information that is necessary for performing the safety-relevant activity of the redundant processor part of the electronic safety-relevant equipment is mutually verified by the individual redundant processor parts of the given electronic safety-relevant equipment when initiating or performing a safety-relevant activity, while in order to verify the correctness is necessary the congruency, for the meaning of the appropriate safety-relevant information, attained in the minimum-specified number of redundant processor parts from the total number of redundant processor parts of the given electronic safety-relevant equipment.

3. The method pursuant to claim 1 or 2, **characterised in that**
- the safety-relevant information, that is necessary for performing the safety-relevant activity of the redundant processor part of the electronic safety-relevant equipment, is protected by encryption in order to protect it against its unwelcome unauthorised use by a processor part of the electronic safety-relevant equipment, that has not fulfilled all the necessary conditions for performing a safety-relevant activity,
- while the key, required for decoding the safety-relevant information encrypted in this way is given by a previously-defined cooperating and verifying redundant processor part of the electronic safety-relevant equipment after verifying the integrity of the given redundant processor part of the electronic safety-relevant equipment.

4. The method pursuant to claims 1, 2 or 3, **characterised in that**
- part of the safety-relevant information, that is necessary for performing the safety- relevant activity of the redundant processor part of the electronic safety-relevant equipment, is also authentication information that is necessary for creating and verifying authentic safety-relevant messages,
- while when performing the safety-relevant activity of the given redundant processor part of the electronic safety-relevant equipment, authentic safety-relevant messages transferred between connected electronic safety-relevant equipment are created and verified using this authentication information.

5. The method pursuant to claims 1, 2, 3 or 4, **characterised in that**
- the safety-relevant information, that is necessary for performing the safety-relevant activity of the redundant processor part of the electronic safety-relevant equipment, is transferred from the volatile operating memory to the non-volatile memory belonging to the redundant processor part of the electronic safety-relevant equipment in the event of a controlled termination of the activity of the given redundant processor part of the electronic safety-relevant equipment due to a loss of electricity or the beginning of a service event during otherwise failure-free activity,
- which enables it to be reused after the electricity is restored to the safety-relevant equipment while restoring the safety-relevant activity of the redundant processor part of the electronic safety-relevant equipment.

6. The method pursuant to claim 5, **characterised in that**
- the safety-relevant information, that is necessary for performing the safety-relevant activity of the redundant processor part of the electronic safety-relevant equipment, is intentionally rewritten by different information obtained by encryption in the non-volatile memory belonging to the given redundant processor part of the electronic safety-relevant equipment after initiating the activity of the redundant processor part of the electronic safety-relevant equipment,
- while the key, required for decoding the safety-relevant information stored in the volatile operating memory of the redundant processor part of the electronic safety-relevant equipment, encrypted in this way, is stored in the non-volatile memory belonging to the given redundant processor part of the electronic safety-relevant equipment at the instant of a controlled termination of the activity of the redundant processor part of the electronic safety-relevant equipment,
- so that when the redundant processor part of the electronic safety-relevant equipment transits to a safe state after a failure, the appropriate key stored in the volatile operating memory of the given redundant processor part of the electronic safety-relevant equipment is intentionally rewritten by a different information, hence corrupting the said-safety relevant information.

7. The method pursuant to claim 1, 2, 3, 4 or 5, **characterised in that**
- the safety-relevant information, that is necessary for performing the safety-relevant activity of the redundant processor part of the electronic safety-relevant equipment, is replaced in the volatile operating memory of the given redundant processor part of the electronic safety-relevant equipment by safety-relevant information, that is necessary for performing the safety-relevant activity of the redundant processor part of the electronic safety-relevant equipment in various degraded functional modes with functional limitations in the event of the detection of a failure, depending on the character, severity and extent of the detected failure or detected failures of the individual redundant processor parts of the electronic safety-relevant equipment.

8. The method pursuant to claim 1, 2, 3, 4, 5 or 7, **characterised in that**
- the safety-relevant information, that is necessary for performing the safety-relevant activity of the redundant processor part of the electronic safety-relevant equipment, is continuously modified in the volatile operating memory of the given redundant processor part of the electronic safety-relevant equipment during the safety-relevant activity of the given redundant processor part of the electronic safety-relevant equipment on the basis of the verified integrity of the cooperating previously-defined redundant processor parts of the given electronic safety-relevant equipment.

9. The method pursuant to claim 5, 6, 7 or 8, **characterised in that**
- the safety-relevant information, that is necessary for performing the safety-relevant activity of the redundant processor part of the electronic safety-relevant equipment, is encrypted using a key during every modification in the volatile operating memory of the given redundant processor part of the electronic safety-relevant equipment and the safety-relevant information encrypted in this manner, is stored in the non-volatile memory belonging to the given redundant processor part of the electronic safety-relevant equipment.

10. The method pursuant to claim 9, **characterised in that**
- the safety-relevant information, that is necessary for performing the safety-relevant activity of the redundant processor part of the electronic safety-relevant equipment, is encrypted using a multi-component key during every modification in the volatile operating memory of the given redundant processor part of the electronic safety-relevant equipment, in cooperation with the previously-defined redundant processor parts of the given electronic safety-relevant equipment, and the safety-relevant information encrypted in this manner is stored in the non-volatile memory belonging to the given redundant processor part of the electronic safety-relevant equipment
- so that, at the instant of a controlled termination of the activity of the redundant processor part of the electronic safety-relevant equipment, the appropriate part of the multi-component key, necessary for decoding the safety-relevant information encrypted in this manner, is stored in the non-volatile memory, belonging to the given redundant processor part of the electronic safety-relevant equipment
- so that, when initiating the safety-relevant activity, the safety-relevant information, encrypted in this manner and stored in the non-volatile memory belonging to the given redundant processor part of the electronic safety-relevant equipment, is decoded on the basis of the verified integrity of the cooperating previously-defined redundant processor parts of the given electronic safety-relevant equipment by the joint use of all of the keys components.

## Patentansprüche

1. Verfahren zur Erhaltung des Sicherheitszustands einer elektronischen sicherheitsrelevanten Anlage mit gekoppelter Sicherheit für einen Störfall, insbesondere bei einer Bahnsignalanlage, d.h. einer elektronischen Anlage, die sich auf die Sicherheit bezieht, wobei eine redundante Sicherheitstechnologie zur Absicherung der Sicherheit für die Dauer des Störfalls verwendet wird, und die über zwei oder mehr Redundant-Prozessorbereiche verfügt, von denen jeder über einen eigenen nichtflüchtigen und einen flüchtigen Operationsspeicher verfügt, der zur Ablage sicherheitsrelevanter und aus Datendateien bestehender Informationen dient, **dadurch gekennzeichnet, daß**
- eine sicherheitsrelevante Information, die für die Durchführung der sicherheitsrelevanten Tätigkeit des Redundant-Prozessorbereichs unerlässlich ist und die im zum gegebenen Redundant-Prozessorbeich gehörenden nichtflüchtigen Speicher hinterlegt wird, wird nach Wiederaufnahme der sicherheitsrelevanten Tätigkeit in den flüchtigen Operationsspeicher des Redundant-Prozessorbereich übertragen und vorsätzlich mit einer unterschiedlichen Information überschrieben, wobei die besagte sicherheitsrelevante Information im zum gegebenen Redundant-Prozessorbereich gehörenden nichtflüchtigen Speicher wertlos gemacht wird,
- wobei beim Übergang des Redundant-Prozessorbereichs in den Sicherheitszustand nach dem Störfall die im flüchtigen Operationsspeicher des gegebenen Redundant-Prozessorbereichs hinterlegte entsprechende sicherheitsrelevante Information vorsätzlich mit einer unterschiedlichen Information überschrieben wird und somit die besagte sicherheitsrelevante Information wertlos gemacht wird,
- wodurch abgesichert wird, daß im Falle einer Reinitialisierung des Redundant-Prozessorbereichs der elektronischen sicherheitsrelevanten Anlage diese sicherheitsrelevante Information nicht wieder erneuert werden kann und somit der Sicherheitszustand erhalten bleibt und dieser nur auf der vorgeschriebenen Art und Weise durch das Bedienungs- bzw. Wartungspersonal verlassen werden kann.

2. Verfahren nach Anspruch 1, **dadurch gekennzeichnet, daß**
- die sicherheitsrelevante Information, die für die Durchführung der sicherheitsrelevanten Tätigkeit im Redundant-Prozessorbereich der elektronischen sicherheitsrelevanten Anlage unerlässlich ist, bei Beginn, eventuell während der Ausübung der sicherheitsrelevanten Tätigkeit der einzelnen Redundant-Prozessorbereiche der gegebenen elektronischen sicherheitsrelevanten Anlage untereinander überprüft wird unter der Berücksichtigung, daß für eine Überprüfung der Richtigkeit eine Übereinstimmung der Bedeutung der entsprechenden sicherheitsrelevanten Informationen, die in wenigstens einer festgelegten Mindestanzahl von Redundant-Prozessorbereichen von der Gesamtanzahl der Redundant-Prozessorbereiche der gegebenen elektronischen sicherheitsrelevanten Anlage erreicht wird, notwendig ist.

3. Verfahren nach Anspruch 1 oder 2, **dadurch gekennzeichnet, daß**
- eine sicherheitsrelevante Information, die für die Durchführung der sicherheitsrelevanten Tätigkeit im Bereich des redundanten Prozessors der elektronischen sicherheitsrelevanten Anlage notwendig ist, wird zum Schutz vor ihrer unerwünschten unberechtigten Verwendung durch den Redundant-Prozessorbereich der elektronischen sicherheitsrelevanten Anlage, welcher nicht alle erforderlichen, für die Durchführung der sicherheitsrelevanten Tätigkeit notwendigen Bedingungen erfüllt, durch Chiffrierung geschützt,
- wobei der Schlüssel, der für die Dechiffrierung einer so chiffrierten sicherheitsrelevanten Information unerlässlich ist, einem vorher festgelegten kooperierenden und überprüfenden Redundant-Prozessorbereich der elektronischen sicherheitsrelevanten Anlage nach der Integritätsüberprüfung des gegebenen Redundant-Prozessorbereichs der elektronischen sicherheitsrelevanten Anlage erteilt wird.

4. Verfahren nach Anspruch 1, 2 oder 3, **dadurch gekennzeichnet, daß**
- zur sicherheitsrelevanten Information, die unerlässlich für die Ausübung der sicherheitsrelevanten Tätigkeit des Redundant-Prozessorbereichs der elektronischen sicherheitsrelevanten Anlage ist, auch eine authentisierende Information gehört, die unerlässlich für die Bildung und Überprüfung einer authentischen sicherheitsrelevanten Mitteilung ist,
- wobei bei der Ausübung der sicherheitsrelevanten Tätigkeit des Redundant-Prozessorbereichs der gegebenen elektronischen sicherheitsrelevanten Anlage mittels dieser Authentisierungsinformation authentische sicherheitsrelevante Mitteilungen gebildet und überprüft werden, welche zwischen den sich anschließenden elektronischen sicherheitsrelevanten Anlagen übermittelt werden.

5. Verfahren nach Anspruch 1, 2, 3 oder 4, **dadurch gekennzeichnet, daß**
- die sicherheitsrelevante Information, die unerlässlich für die Ausübung der sicherheitsrelevanten Tätigkeit des Redundant-Prozessorbereichs der elektronischen sicherheitsrelevanten Anlage ist, im Falle einer gesteuerten Beendigung der Tätigkeit des Redundant-Prozessorbereichs der elektronischen sicherheitsrelevanten Anlage bedingt durch einen Ausfall der Stromversorgung oder der Einleitung einer Service-Leistung bei einer ansonsten störungsfreien Tätigkeit vom flüchtigen Operationsspeicher auf einen nichtflüchtigen, dem gegebenen Redundant-Prozessorbereich der elektronischen sicherheitsrelevanten Anlage zugehörigen Speicher übertragen wird,
- wodurch nach Wiederaufnahme der Stromversorgung der elektronischen sicherheitsrelevanten Anlage ihre erneute Verwendung bei der Wiederaufnahme der sicherheitsrelevanten Tätigkeit des Redundant-Prozessorbereichs der elektronischen sicherheitsrelevanten Anlage ermöglicht wird.

6. Verfahren nach Anspruch 5, **dadurch gekennzeichnet, daß**
- eine sicherheitsrelevante Information, die unerlässlich für die Ausübung der sicherheitsrelevanten Tätigkeit des Redundant-Prozessorbereichs der elektronischen sicherheitsrelevanten Anlage ist, nach Aufnahme der Tätigkeit des Redundant-Prozessorbereichs der elektronischen sicherheitsrelevanten Anlage vorsätzlich mit einer abweichenden Information überschrieben wird, die durch Chiffrieren im nichtflüchtigen, zum gegebenen Redundant-Prozessorbereich der elektronischen sicherheitsrelevanten Anlage gehörenden Speicher erhalten wird,
- wobei der Schlüssel, der zur Dechiffrierung einer so chiffrierten sicherheitsrelevanten Information notwendig ist und der im flüchtigen Operationsspeicher des Redundant-Prozessorbereichs der elektronischen sicherheitsrelevanten Anlage abgelegt wird, im Moment der gesteuerten Beendigung der Tätigkeit des Redundant-Prozessorbereichs der elektronischen sicherheitsrelevanten Anlage im nichtflüchtigen, dem gegebenen Redundant-Prozessorbereich der elektronischen sicherheitsrelevanten Anlage zugehörigen Speicher abgelegt wird,
- während beim Übergang des Redundant-Prozessorbereichs der elektronischen sicherheitsrelevanten Anlage in den Safe-Zustand nach dem Ausfall der im flüchtigen Operationsspeicher des gegebenen Redundant-Prozessorbereichs der elektronischen sicherheitsrelevanten Anlage gespeicherte entsprechende Schlüssel vorsätzlich mit einer unterschiedlichen Information überschrieben wird, also mit der besagten relevanten Information ungültig gemacht wird.

7. Verfahren nach Anspruch 1, 2, 3, 4 oder 5, **dadurch gekennzeichnet, daß**
- die sicherheitsrelevante Information, die unerlässlich für die Ausübung der sicherheitsrelevanten Tätigkeit des Redundant-Prozessorbereichs der elektronischen sicherheitsrelevanten Anlage ist, wird im Falle der Feststellung einer Störung - in Abhängigkeit vom Charakter, von der Schwere und vom Umfang der festgestellten Störung bzw. festgestellten Störungen der einzelnen Redundant-Prozessorbereiche der elektronischen sicherheitsrelevanten Anlage - im flüchtigen Operationsspeicher des gegebenen Redundant-Prozessorbereichs der elektronischen sicherheitsrelevanten Anlage mit einer sicherheitsrelevanten Information, die unerlässlich für die Ausübung der sicherheitsrelevanten Tätigkeit des gegebenen Redundant-Prozessorbereichs der elektronischen sicherheitsrelevanten Anlage ist, in unterschiedlichen, degradierten Funktionsmodi mit funktioneller Einschränkung ersetzt.

8. Verfahren nach Anspruch 1, 2, 3, 4, 5 oder 7, **dadurch gekennzeichnet, daß**
- die sicherheitsrelevante Information, die unerlässlich für die Ausübung der sicherheitsrelevanten Tätigkeit des Redundant-Prozessorbereichs der elektronischen sicherheitsrelevanten Anlage ist, wird im Verlauf der sicherheitsrelevanten Tätigkeit des gegebenen Redundant-Prozessorbereichs der elektronischen sicherheitsrelevanten Anlage auf der Grundlage der Integritätsüberprüfung der kooperierenden vordefinierten Redundant-Prozessorbereiche der gegebenen elektronischen sicherheitsrelevanten Anlage laufend im flüchtigen Operationsspeicher des gegebenen Redundant-Prozessorbereichs der elektronischen sicherheitsrelevanten Anlage modifiziert.

9. Verfahren nach Anspruch 5, 6, 7 oder 8, **dadurch gekennzeichnet, daß**
- die sicherheitsrelevante Information, die unerlässlich für die Ausübung der sicherheitsrelevanten Tätigkeit des Redundant-Prozessorbereichs der elektronischen sicherheitsrelevanten Anlage ist, wird bei jeder Modifikation im flüchtigen Operationsspeicher des gegebenen Redundant-Prozessorbereichs der elektronischen sicherheitsrelevanten Anlage mit Hilfe eines Schlüssels chiffriert und die so chiffrierte sicherheitsrelevante Information im zum gegebenen Redundant-Prozessorbereich der elektronischen sicherheitsrelevanten Anlage gehörenden nichtflüchtigen Speicher abgelegt.

10. Verfahren nach Anspruch 9, **dadurch gekennzeichnet, daß**
- die sicherheitsrelevante Information, die unerlässlich für die Ausübung der sicherheitsrelevanten Tätigkeit des Redundant-Prozessorbereichs der elektronischen sicherheitsrelevanten Anlage ist, wird bei jeder Modifikation im flüchtigen Operationsspeicher des gegebenen Redundant-Prozessorbereichs der elektronischen sicherheitsrelevanten Anlage in Kooperation vordefinierter Redundant-Prozessorbereiche der gegebenen elektronischen sicherheitsrelevanten Anlage mittels eines Mehrkomponentenschlüssels chiffriert und die so chiffrierte sicherheitsrelevante Information in den nichtflüchtigen Speicher des dazugehörenden gegebenen Redundant-Prozessorbereichs der elektronischen sicherheitsrelevanten Anlage gespeichert,
- wobei der entsprechende Teil des Mehrkomponentenschlüssels, der unerlässlich für die Dechiffrierung der so chiffrierten sicherheitsrelevanten Information im Moment einer gesteuerten Beendigung der Tätigkeit des gegebenen Redundant-Prozessorbereichs der elektronischen sicherheitsrelevanten Anlage ist, im zum gegebenen Redundant-Prozessorbereich der elektronischen sicherheitsrelevanten Anlage gehörenden nichtflüchtigen Speicher abgelegt wird,
- wobei bei Wiederaufnahme der sicherheitsrelevanten Tätigkeit die auf der Grundlage der Integritätsüberprüfung des kooperierenden vordefinierten Redundant-Prozessorbereichs der gegebenen elektronischen sicherheitsrelevanten Anlage unter gemeinsamer Verwendung aller Komponenten des Schlüssels der so chiffrierten und im nichtflüchtigen Speicher des zum gegebenen Redundant-Prozessorbereichs gehörenden elektronischen sicherheitsrelevanten Anlage abgelegte sicherheitsrelevante Information dechiffriert wird.

## Revendications

1. Procédé de préservation de l'état de sécurité d'une installation électronique pertinente de sécurité avec sécurité composée en cas de panne, avant tout d'un équipement de signalisation ferroviaire, c'est-à-dire équipement électronique se rapportant à la sécurité, dans lequel est utilisée une technologie redondante de sécurité pour assurer la sécurité pendant le temps de la panne, et contenant deux parties ou plus redondantes de processeur, chacune comportant sa propre mémoire opérationnelle non volatile et volatile, disponible pour la sauvegarde des informations pertinentes pour la sécurité, se composant d'ensembles de données, **caractérisé par le fait que**
- les informations pertinentes de sécurité, indispensables pour la réalisation d'une activité de sécurité pertinente d'une partie redondante du processeur, sauvegardées dans la mémoire non volatile appartenant à la partie redondante du processeur en question, sont transférées après le début de l'activité pertinente de sécurité dans la mémoire volatile opérationnelle de la partie redondante du processeur, et se transcrivent à dessein par une information différente, les informations en question pertinentes pour la sécurité se dévaluant dans la mémoire non volatile appartenant à la partie redondante concrète du processeur,
- les informations pertinentes de sécurité correspondantes, sauvegardées dans la mémoire volatile opérationnelle de la partie redondante concrète du processeur, se transcrivant à dessein par une information différente lors du passage de la partie redondante du processeur dans un état de sécurité après une panne, et se dévaluant par conséquent par l'information pertinente de sécurité donnée,
- ce qui garantit que, même en cas de réinitialisation de la partie redondante du processeur d'une installation électronique pertinente de sécurité, il n'est déjà plus possible de restaurer cette information pertinente de sécurité, l'état de sécurité se maintenant et ne pouvant être quitté que par la procédure prescrite du service ou de la maintenance.

2. Procédé en vertu de la revendication 1, **caractérisé par le fait que**
- l'information pertinente de sécurité, indispensable pour l'exercice de l'activité pertinente de sécurité de la partie du processeur redondant de l'installation électronique pertinente de sécurité, est mutuellement vérifiée lors du début, le cas échéant lors de l'exercice de l'activité pertinente de sécurité par chaque partie pertinente du processeur de l'installation électronique pertinente de sécurité donnée, la conformité de la signification des informations pertinentes de sécurité correspondantes, atteinte au moins dans un nombre minimal fixé de parties de processeur redondant sur le nombre global de parties de processeur redondant de l'installation électronique pertinente de sécurité donnée, étant nécessaire pour la vérification de l'exactitude.

3. Procédé en vertu de la revendication 1 ou 2, **caractérisé par le fait que**
- l'information pertinente de sécurité, indispensable pour l'exercice de l'activité pertinente de sécurité de la partie du processeur redondant de l'installation électronique pertinente de sécurité, est protégée par un chiffrage pour la protection contre son utilisation indésirable injustifiée par la partie du processeur redondant de l'installation électronique pertinente de sécurité n'ayant pas rempli toutes les conditions adéquates nécessaires pour l'exercice de l'activité pertinente de sécurité,
- la clé, indispensable pour le déchiffrage de l'information pertinente de sécurité ainsi chiffrée, étant fournie à l'avance par la partie collaboratrice et vérificatrice du processeur redondant de l'installation électronique pertinente de sécurité, après vérification de l'intégrité de la partie donnée du processeur redondant de l'installation électronique pertinente de sécurité.

4. Procédé en vertu de la revendication 1, 2 ou 3, **caractérisé par le fait que**
- une information d'authentification, indispensable pour la création et la vérification d'une information pertinente de sécurité authentique, fait également partie de l'information pertinente de sécurité indispensable pour l'exercice de l'activité pertinente de sécurité de la partie du processeur redondant de l'installation électronique pertinente de sécurité,
- les messages pertinents de sécurité authentiques transmis entre les installations électroniques pertinentes de sécurité connexes étant créés et vérifiés à l'aide de cette information d'authentification lors de l'exercice de l'activité pertinente de sécurité de la partie du processeur redondant de l'installation électronique pertinente de sécurité donnée.

5. Procédé en vertu de la revendication 1, 2, 3 ou 4, **caractérisé par le fait que**
- l'information pertinente de sécurité, indispensable pour l'exercice de l'activité pertinente de sécurité de la partie du processeur redondant de l'installation électronique pertinente de sécurité, passe d'une mémoire opérationnelle volatile dans une mémoire non volatile appartenant à la partie du processeur redondant de l'installation électronique pertinente de sécurité donnée, en cas d'achèvement contrôlé de l'activité de la partie du processeur redondant de l'installation électronique pertinente de sécurité, du fait d'un défaut d'alimentation ou du début d'une opération de service lors d'une activité par ailleurs sans dysfonctionnement,
- ce qui permet, après restauration de l'alimentation de l'installation électronique pertinente de sécurité, sa réutilisation lors du renouvellement de l'activité pertinente de sécurité de la partie du processeur redondant de l'installation électronique pertinente de sécurité.

6. Procédé en vertu de la revendication 5, **caractérisé par le fait que**
- l'information pertinente de sécurité, indispensable pour l'exercice de l'activité pertinente de sécurité de la partie du processeur redondant de l'installation électronique pertinente de sécurité, est retranscrite intentionnellement par une information différente, obtenue par un chiffrage dans la partie non volatile appartenant à la partie donnée du processeur redondant de l'installation électronique pertinente de sécurité, après le début de l'activité de la partie du processeur redondant de l'installation électronique pertinente de sécurité,
- la clé, indispensable pour le déchiffrage de l'information pertinente de sécurité ainsi chiffrée et déposée dans la mémoire volatile opérationnelle de la partie du processeur redondant de l'installation électronique pertinente de sécurité, est déposée dans la mémoire non volatile appartenant à la partie donnée du processeur redondant de l'installation électronique pertinente de sécurité au moment de l'achèvement contrôlé de l'activité de la partie du processeur redondant de l'installation électronique pertinente de sécurité,
- tandis que, lors du passage de la partie du processeur redondant de l'installation électronique pertinente de sécurité en situation de sécurité après une panne, la clé correspondante, déposée dans la mémoire volatile opérationnelle de la partie donnée du processeur redondant de l'installation électronique pertinente de sécurité, est intentionnellement retranscrite par une information différente, par conséquent se dévalue par cette information pertinente dite.

7. Procédé en vertu de la revendication 1, 2, 3, 4 ou 5, **caractérisé par le fait que**
- l'information pertinente de sécurité, indispensable pour l'exercice de l'activité pertinente de sécurité de la partie du processeur redondant de l'installation électronique pertinente de sécurité est, en cas de panne détectée, en liaison avec le caractère, la gravité et l'étendue de la panne détectée ou des pannes détectées de chaque partie du processeur redondant de l'installation électronique pertinente de sécurité, remplacée dans la mémoire opérationnelle volatile de la partie donnée du processeur redondant de l'installation électronique pertinente de sécurité, par une information pertinente, indispensable pour l'exercice de l'activité pertinente de sécurité de la partie donnée du processeur redondant de l'installation électronique pertinente de sécurité, en divers modes fonctionnels dégradés avec limitation fonctionnelle.

8. Procédé en vertu de la revendication 1, 2, 3, 4 ou 7, **caractérisé par le fait que**
- l'information pertinente de sécurité, indispensable pour l'exercice de l'activité pertinente de sécurité de la partie du processeur redondant de l'installation électronique pertinente de sécurité, se modifie sans cesse dans la mémoire volatile opérationnelle de la partie donnée du processeur redondant de l'installation électronique pertinente de sécurité pendant l'activité pertinente de sécurité de la partie donnée du processeur redondant de l'installation électronique pertinente de sécurité, sur la base d'une vérification de l'intégrité des parties collaboratrices définies à l'avance du processeur redondant de l'installation électronique pertinente de sécurité.

9. Procédé en vertu de la revendication 5, 6, 7 ou 8, **caractérisé par le fait que**
- l'information pertinente de sécurité, indispensable pour l'exercice de l'activité pertinente de sécurité de la partie du processeur redondant de l'installation électronique pertinente de sécurité, est chiffrée à l'aide d'une clé lors de chaque modification dans la mémoire volatile opérationnelle de la partie donnée du processeur redondant de l'installation électronique pertinente de sécurité, l'information pertinente de sécurité ainsi chiffrée étant enregistrée dans la mémoire non volatile appartenant à la partie donnée du processeur redondant de l'installation électronique pertinente de sécurité.

10. Procédé en vertu de la revendication 9, **caractérisé par le fait que**
- l'information pertinente de sécurité, indispensable pour l'exercice de l'activité pertinente de sécurité de la partie du processeur redondant de l'installation électronique pertinente de sécurité, est chiffrée à l'aide d'une clé à plusieurs composantes lors de chaque modification dans la mémoire volatile opérationnelle de la partie donnée du processeur redondant de l'installation électronique pertinente de sécurité, avec la collaboration des parties définies à l'avance du processeur redondant de l'installation électronique pertinente de sécurité donnée, l'information pertinente de sécurité ainsi chiffrée étant enregistrée dans la mémoire non volatile appartenant à la partie donnée du processeur redondant de l'installation électronique pertinente de sécurité,
- la partie correspondante de la clé à plusieurs composantes, indispensable pour le déchiffrage de l'information pertinente de sécurité ainsi chiffrée, étant déposée dans la mémoire non volatile appartenant à la partie donnée du processeur redondant de l'installation électronique pertinente de sécurité, au moment de l'achèvement contrôlé de l'activité de la partie donnée du processeur redondant de l'installation électronique pertinente de sécurité, l'information pertinente de sécurité ainsi chiffrée, enregistrée dans la mémoire non volatile appartenant à la partie donnée du processeur redondant de l'installation électronique pertinente de sécurité, étant déchiffrée par une utilisation commune de toutes les composantes de la clé lors du début de l'activité pertinente de sécurité, sur la base d'une vérification de l'intégrité des parties collaboratrices définies à l'avance du processeur redondant de l'installation électronique pertinente de sécurité donnée.
